# EUROPEAN PATENT APPLICATION

(11) **EP 3 287 743 A1**
(43) Date of publication of application: **28.02.2018**
(21) Application number: 16185409.6
(22) Date of filing: 23.08.2016
(51) Int. Cl.: G01C 9/12

(54) **VERTICALITY CHECKING INSTRUMENT AND MOUNTING METHOD THEREOF**

(71) Applicant: Sallustio, Alfredo, 00173 Roma (IT)
(72) Inventor: Sallustio, Alfredo, 00173 Roma (IT)
(74) Representative: Cardelli, Guido

(57) **Abstract**

A verticality checking instrument (1) has a housing (2) filled with a transparent liquid in which a suspension plate (4) is suspended from a pivot (6). The housing (2) is a right prism having a lower end and an upper end both being removably closed with closure elements (10, 12). Described is also a mounting method of a verticality checking instrument (1), comprising the tight closure of said lower end with a first closure element (10) and of said upper end with a second closure element (12) after pouring water in the housing (2) through its upper end for its filling up.

## Description

The present invention concerns a verticality checking instrument and mounting method thereof.

GB 2242744 A discloses an inclination measuring instrument in which a weight is suspended from a pivot and encapsulated in a fluid filled housing, so that its angle of inclination is visible. The weight is referred to as a suspension plate and the fluid is necessary to dampen oscillation to a minimum. This instrument is rather heavy to be transported because of the fluid inside the housing.

GB 2450126 A describes a device that includes a pointer having a lead weight attached to an end opposite the pointer. The pointer and weight are mounted in a casing which include oil for damping pointer movement. The casing is transparent and has a scale. Such a device is heavy like that according to GB 2242744 A.

US 8,898,917 B1 discloses a multipurpose measurement apparatus comprising a protractor wherein a weight is suspended from a center shaft inside a clear housing filled with light transparent oil. The protractor is very small, since it is contained in the multipurpose measurement apparatus so that an inclination measurement cannot be accurate. In any case, the instrument is rather heavy to be transported.

The aim of the invention is to overcome the drawbacks of the prior art.

In particular, an object of the invention is to provide an instrument sufficiently great for giving an accurate perpendicular indication.

Another object of the invention is to provide an instrument that is easy to be transported.

These objects are achieved by the present invention that provides, in a first aspect thereof, a verticality checking instrument comprising a housing filled with a transparent liquid, preferably water, in which a weight is suspended from a pivot, the housing being a right prism having a lower end and an upper end both being removably closed by closure elements.

In a second aspect the invention provides a mounting method of the verticality checking instrument in order to make it ready for the use, the above housing having opposite walls with facing through holes near the upper end, and a suspension plate having a ring shaped end and a pivot, comprising the following steps:
- putting the suspension plate inside the housing with its ring shaped end concentric with the facing through holes;
- inserting the pivot in the facing through holes of the housing and in the ring shaped end of the suspension plate;
- closing the facing through holes with stoppers;
- tightly closing the lower end of the housing with a first closure element;
- pouring water in the housing through its upper end; and
- closing the upper end of the housing with a second closure element.

A main advantage of the present invention is that the verticality checking instrument can be transported without water and filled before its use.

The instrument is simple and accurate since the suspension plate provides the vertical direction when matching a line segment in a transparent window in at least one of said opposite walls.

Further features and advantages of the invention will be more evident from the description of an embodiment of a verticality checking instrument, depicted in the accompanying drawings in which:

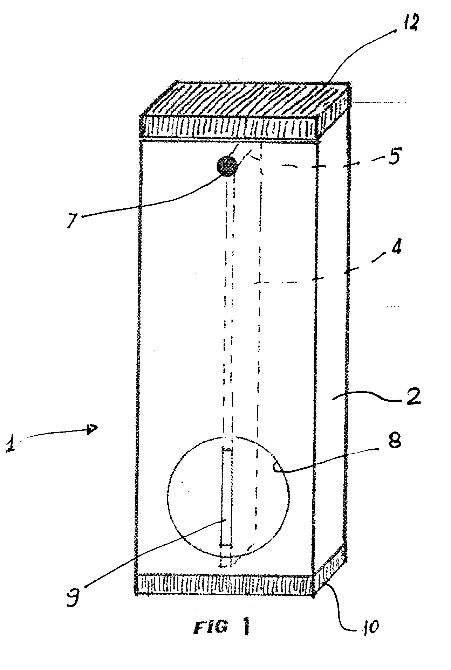

- Figure 1 is a schematic axonometric representation of the instrument according to the invention; and
- Figures 2 to 9 are axonometric views showing mounting steps of the instrument in Figure 1.

With reference to the drawings, a verticality checking instrument 1 comprises a housing 2 filled with a transparent liquid, preferably water. Inside the housing 2 a weight in the form of a suspension plate 4, preferably of metal, is suspended from a pivot 6 passing through a ring shaped end 5 of the suspension plate 4. The housing 2 is a right prism, for example with a rectangular cross-section. The right prism has a lower end and an upper end both being removably closed with a lower closure element 10 and an upper closure element 12 respectively. The closure elements 10, 12 are made of rubber.

The housing 2 has opposite walls having facing through holes 3, 3 for the pivot 6 near the upper end of the housing 2. The facing through holes 3, 3 are closed by stoppers 7 covering the pivot 6.

At least one of the opposite walls has a transparent window 8 with a vertical line segment 9 indicating the vertical direction of the housing 2. Preferably the vertical line segment 9 has a thickness at least equal to the thickness of the suspension plate 4.

Before the use, the verticality checking instrument is preferably demounted and without water for reducing its global weight. For making the instrument according to the invention ready for its use, it can be mounted easily by performing the following steps.

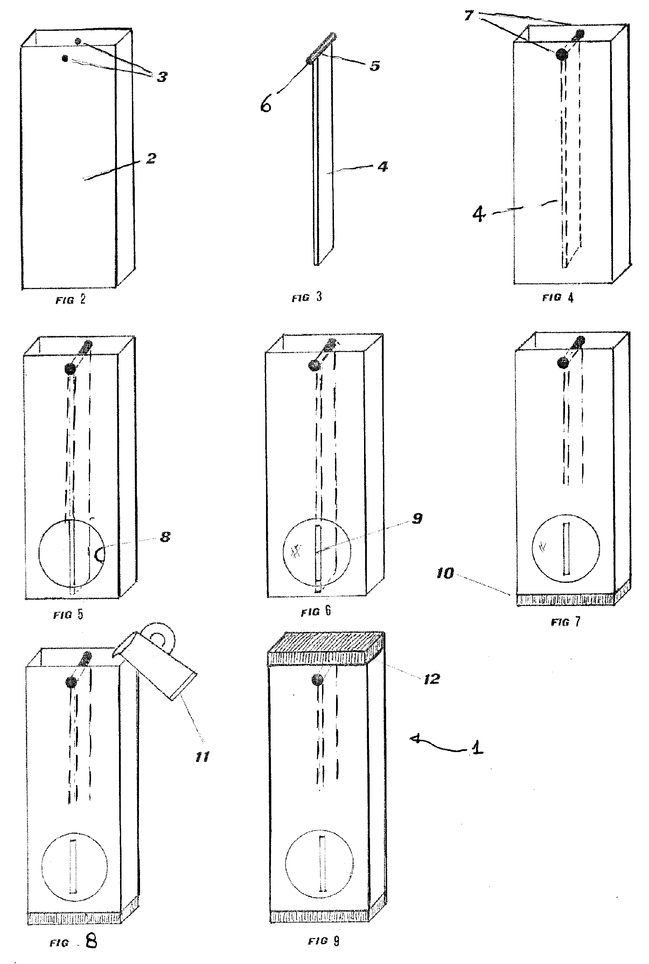

The suspension plate 4 is put inside the housing 2 with its ring shaped end 5 concentric with the facing through holes 3, 3 of the housing 2. Then the pivot 6 is inserted in the facing through holes 3, 3 and in the ring shaped end 5 of the suspension plate 4. The facing through holes 3, 3 are closed with stoppers 7. Then the lower end of the housing 2 is tightly closed with the first closure element 10. The housing 2 is ready for receiving water through its upper end (Figure 8) from a recipient 9. Finally, after the housing 2 being filled, its upper end is closed with the second closure element 12.

The verticality checking instrument 1 works as follows.

The housing 2 is leaned to a wall (not shown) aside a determined point whose perpendicularity needs to be checked. The instrument 1 is moved easily and quickly until the suspension plate 4 is perfectly hidden from view behind the vertical line segment 9 on the window 8. When one sees one single line segment, that means that the wall is vertical.

It shall be underlined that this operation is greatly facilitated by the water that prevents the suspension plate 4 from swinging too much.

Finally, it should be appreciated that the instrument according to the invention is inexpensive and greatly facilitates the job of an operator.

## Claims

1. A verticality checking instrument (1) comprising a housing (2) filled with a transparent liquid in which a weight is suspended from a pivot (6), **characterized in that** the housing (2) is a right prism having a lower end and an upper end both being removably closed with closure elements (10, 12).

2. The instrument according to claim 1, wherein the housing (2) has opposite walls having facing through holes (3, 3) for said pivot (6) near the upper end of the housing (2).

3. The instrument according to claim 2, wherein at least one of said opposite walls has a transparent window (8) with a vertical line segment (9) indicating the vertical direction of the housing (2).

4. The instrument according to claim 2, wherein said facing through holes (3, 3) are closed by stoppers (7, 7).

5. The instrument according to claim 1, wherein said weight is a suspension plate (4) having a ring shaped end (5) for receiving the pivot (6).

6. The instrument according to claim 1, wherein the housing (2) has a rectangular cross-section.

7. The instrument according to claim 1, wherein the transparent liquid is water.

8. The instrument according to claim 1, wherein the closure elements (10, 12) are made of rubber.

9. A mounting method of a verticality checking instrument (1), comprising a housing (2) in the form of a right prism having opened upper and lower ends and opposite walls with facing through holes (3, 3) near the upper end, and a suspension plate (4) having a ring shaped end (5) and a pivot (6), **characterized by** the following steps:
- putting the suspension plate (4) inside the housing (2) with its ring shaped end (5) concentric with the facing through holes (3, 3);
- inserting the pivot (6) in the facing through holes (3, 3) of the housing (2) and in the ring shaped end (5) of the suspension plate (4);
- closing the facing through holes (3, 3) with stoppers (7, 7);
- tightly closing the lower end of the housing (2) with a first closure element (10);
- pouring water in the housing (2) through its upper end for its filling up; and
- closing the upper end of the housing (2) with a second closure element (12).
